(19) **Europäisches Patentamt**

**European Patent Office**

**Office européen des brevets**

(11) **EP 0 794 694 B1**

(12) **EUROPÄISCHE PATENTSCHRIFT**

(45) Veröffentlichungstag und Bekanntmachung des Hinweises auf die Patenterteilung:
**20.12.2000 Patentblatt 2000/51**

(51) Int Cl.⁷: **H05B 41/288**

(21) Anmeldenummer: **97103482.2**

(22) Anmeldetag: **04.03.1997**

(54) **Schaltungsanordnung zum Betrieb einer Hochdruckgasentladungslampe**

Circuit for operating a high pressure discharge lamp

Circuit pour alimenter une lampe à haute pression

(84) Benannte Vertragsstaaten:
**DE ES FR GB IT SE**

(30) Priorität: **06.03.1996 DE 19608656**

(43) Veröffentlichungstag der Anmeldung:
**10.09.1997 Patentblatt 1997/37**

(73) Patentinhaber: **ROBERT BOSCH GMBH**
**70442 Stuttgart (DE)**

(72) Erfinder:
• **Schmiederer, Claus**
**77688 Freistett (DE)**
• **Gorille, Ingo**
**71739 Oberriexingen (DE)**
• **Mueller, Bernd**
**72766 Reutlingen (DE)**

(56) Entgegenhaltungen:
**EP-A- 0 059 064     EP-A- 0 606 601**
**WO-A-96/04707      DE-A- 3 303 374**
**US-A- 4 904 905     US-A- 5 371 440**

**Beschreibung**

Stand der Technik

Die Erfindung geht aus von einer Schaltungsanordnung zum Betrieb einer Hochdruckgasentladungslampe der im Oberbegriff des Anspruchs 1 definierten Gattung.

Aus der DE 37 29 383 A1 ist eine Schaltungsanordnung zum Betrieb einer Hochdruckgasentladungslampe bekannt, die eine Brückenschaltung, bei der in zumindest einem Zweig zwei gesteuerte Schalttransistoren angeordnet sind enthält, und bei der die Hochdruckgasentladungslampe über den Brückenzweig der Brückenschaltung mit Zünd- und Brennenergie versorgt wird.

Bei dieser bekannten Schaltungsanordnung liegt die Hochdruckgasentladungslampe direkt im Brückenzweig einer als kapazitiver Halbbrücke ausgeführten Brückenschaltung, wobei in Reihe mit der Lampe noch eine Drosselspule angeordnet ist. Des weiteren ist in Reihe mit dieser Anordnung die Sekundärwicklung eines Zündtransformators vorgesehen. Der Versorgungsstrom der Lampe wird durch Veränderung des Tastverhältnisses der Schalttransistoren geregelt und beim Start in bestimmter Weise verändert. Die Impulsfolgefrequenz der bipolaren Versorgungsstromimpulse beträgt z.B. bei Natriumdampflampen etwa 300 Hz, der noch eine höherfrequente Spannung zwischen 30 und 70 kHz überlagert ist. Das Starttastverhältnis ist auf etwa 0,7 und das Betriebstastverhältnis auf etwa 0,5 eingestellt.

Aus dieser bekannten Schaltungsanordnung ist nicht zu entnehmen, ob sie für den Start und den Betrieb von solchen Hochdruckgasentladungslampen Verwendung findet oder verwendet werden kann, die in Kraftfahrzeuge eingebaut werden können und die aus dem Gleichspannungsbordnetz niedriger Spannungswerte, z.B. 6 oder 12 Volt, versorgt werden.

Generell ist zu dieser bekannten Schaltungsanordnung jedoch zu sagen, daß die verwendeten Bauelemente zum einen sehr zahlreich sind und daß zum anderen die verwendeten Bauelemente selbst in sich groß sind bzw. sein müssen, da sie für den Betrieb bei niedrigen Frequenzen ausgelegt sein müssen. Dies steht einem möglichst kostengünstigen Bau und Betrieb einer derartigen Schaltungsanordnung für den Start und den Betrieb einer Hochdruckgasentladungslampe nachteilig entgegen.

Es sind Hochdruckgasentladungslampen für den Betrieb in Kraftfahrzeugen auf dem Markt, die nach zwei verschiedenen Prinzipien arbeiten. Bei dem einen Prinzip wird sowohl der Start als auch der Betrieb im sogenannten Resonanzbetrieb durchgeführt. Dabei liegt die Startfrequenz, also beim Zünden der Lampe, bei etwa 80 kHz und die Brenn- oder Betriebsfrequenz liegt bei etwa 8 bis 16 kHz. Bei dem anderen Prinzip wird die Lampe im sogenannten wackelnden Gleichstrombetrieb betrieben, d.h. der Gleichstrom wird immer wieder umgepolt. Die Umpolfrequenz beträgt etwa 400 Hz. Die Zündung der Lampe erfolgt über einen separaten Impulszünder. Die verwendeten Lampen sind sogenannte Xenonlampen oder Metallhalogenidlampen, deren Hochdruck bei etwa 80 bar liegt. Zum Zünden des Lichtbogens ist im Hinblick auf schlechteste Toleranzbedingungen eine Hochspannung von 24 kV notwendig. Im Brennbetrieb liegt die nötige Spannung bei etwa 85 Volt.

Prinzipielle Nachteile bei diesen beiden Prinzipien liegen darin begründet, daß auch hier relativ viele Bauteile und eine besondere Zündvorrichtung nötig sind und darüber hinaus die Bauteile recht groß sind und hochspannungsfest sein müssen. Dadurch sind in nachteiliger Weise relativ hohe Kosten, recht hohe Verlustleistungen und erheblicher Raumbedarf gegeben.

In der Anmeldung "Schaltung zum Betrieb einer Hochdruckgasentladungslampe" der Anmelderin, die gleichzeitig mit vorliegender Anmeldung eingereicht wird, ist vorgesehen, daß im Brückenzweig einer Brückenschaltung die Primärwicklung eines Transformators angeordnet ist, in Reihe mit dieser Primärwicklung eine Spule, sowie parallel zur Primärwicklung und in Reihe mit der Spule ein Kondensator vorgesehen ist, wodurch ein Reihenresonanz-Konverter mit primärseitigem Resonanzkreis gebildet ist, die Hochdruckgasentladungslampe in Reihe mit der Sekundärwicklung des Transformators angeordnet ist und von ihr mit Brennenergie versorgt wird, und der Brennbetrieb mit Hochfrequenz betrieben wird. Die hier vorliegende Erfindung beschreitet einen prinzipiell anderen vorteilhaften Weg.

US 4 904 905 beschreibt eine Schaltungsanordnung zum Betreiben einer Hochdruckgasentladungslampe, die über eine Brückenschaltung mit hochfrequenter Brennenergie versorgt wird, wobei die Brückenschaltung zumindest einen Zweig mit zwei gesteuerten Schalttransistoren enthält. Im Brückenzweig der Brückenschaltung ist die Primärwicklung eines Transformators angeordnet und auf der Sekundärseite des Transformators ist ein Schwingkreis vorgesehen. Die Hochdruckgasentladungslampe wird von dem sekundärseitigen Schwingkreis mit Brenn- und Zündenergie versorgt, wobei sowohl der Brennbetrieb als auch der Zündvorgang mit Hochfrequenz vorgesehen wird und die Frequenz bei der Zündung höher ist als die Frequenz beim Brennbetrieb. Bei dieser bekannten Schaltungsanordnung enthält der Schwingkreis auf der Sekundärseite des Transformators eine besondere und speziell angezapfte Spule, zu der zum einen ein Kondensator und zum anderen die Hochdruckgasentladungslampe in Reihe mit einem weiteren Kondensator und einem Stromtransformator parallel geschaltet ist. Zur Zündung wird der Schwingkreis mit einer ersten Frequenz von etwa 40-80 kHz erregt und der aus Spule und dazu direkt parallel liegendem Kondensator gebildete Parallelschwingkreis schwingt in entsprechend bemessener Resonanz.

Nach Lampenzündung wird die Gasentladungslampe niederohmig und der in Reihe mit der Gasentladungslampe geschaltete Kondensator wird wirksam. Der Resonanzkreis enthält demnach nach der Zündung die beiden Kondensatoren, die als parallel geschaltet betrachtet werden können. Dadurch wird über den nun mehr fließenden und festgestellten Lampenstrom die Brücke erregende Frequenz auf Betriebsfrequenz von etwa 20-28 kHz umgeschaltet und der darauf abgestimmte sekundäre Schwingkreis schwingt in der zweiten Resonanzfrequenz.

Die Hochdruckgasentladungslampe wird bei dieser bekannten Schaltungsanordnung über eine recht aufwendige Anordnung auf der Sekundärseite des Transformators gespeist, während sie bei vorliegender Erfindung über einen sehr einfach unter Einbeziehung der Sekundärwicklung des Transformators gebildeteten Schwingkreis gespeist wird. Dieser ist mit nur einem separaten kapazitiven Bauelement und der Sekundärwicklung des Transformators sehr einfach gestaltet, sowie in der Lage, sowohl beim Zünden als auch beim Brennbetrieb in unterschiedlichen Frequenzen zu arbeiten. Weiterhin sorgt bei der Erfindung ein Mikrocontroller für die zweckmäßige und einfache Steuerung in einem im Hinblick auf die Bauteilewahl sehr günstigen Frequenzbereich.

Aus der EP-A-606 601 ist der Einsatz eines Mikrokontrollers zur genauen Steuerung einer Brückenschaltung bekannt.

Vorteile der Erfindung

Die erfindungsgemäße Schaltungsanordnung zum Betrieb einer Hochdruckgasentladungslampe mit den kennzeichnenden Merkmalen des Anspruchs 1 hat demgegenüber den Vorteil der kleinen Bauelemente, der Tatsache, daß auf Hochspannungsseite der Lampe zum Zünden nur ein Kondensator und die Sekundärwicklung des Transformators liegen, der Zündspannungsbedarf erheblich erniedrigt ist, aufgrund der angewandten Hochspannung kleine Bauelemente verwendet werden können und damit sowohl der Raumbedarf verkleinert als auch der Kostenaufwand erheblich erniedrigt ist.

Gemäß der Erfindung wird dies prinzipiell erreicht dadurch, daß im Brückenzweig der Brückenschaltung die Primärwicklung eines Transformators angeordnet ist, auf der Sekundärseite des Transformators ein Schwingkreis der lediglich durch die Induktivität der Sekundärwicklung des Transformators und die Kapazität eines Kondensators gebildet ist, angeordnet ist, die Hochdruckgasentladungslampe mit ihren Elektroden direkt parallel zum Kondensator anzuschließen ist, und von dem sekundärseitigen Schwingkreis mit Brenn- und Zündenergie versorgt wird, und sowohl der Brennbetrieb als auch der Zündvorgang mit Hochfrequenz betrieben wird, wobei die Frequenz der Zündung wesentlich höher gewählt ist als die Frequenz beim Brennbetrieb.

Durch die in den weiteren Ansprüchen niedergelegten Maßnahmen sind vorteilhafte Weiterbildungen und Verbesserungen der im Anspruch 1 angegebenen Schaltungsanordnung möglich.

Erfindungsgemäß ist zur Steuerung der Schalttransistoren ein Mikrokontroller vorgesehen, der die notwendigen Steuerimpulsfolgen generiert. In zweckmäßiger und vorteilhafter Weise erfolgt die Steuerung so, daß ein Querstrom in den gesteuerten Schalttransistoren vermieden ist.

In zweckmäßiger Weiterbildung der erfindungsgemäßen Schaltungsanordnung ist ein ASIC mit dem Mikrokontroller verbunden, um die anwendungsspezifische Anpassung an das jeweilige Steuerungsprofil zur Verfügung zu stellen.

Gemäß einer vorteilhaften Weiterbildung der Erfindung erfolgt die Regelung der Leistung der Hochdruckgasentladungslampe über eine Änderung der Frequenz, wobei die Änderung entlang der Flanke der Resonanzkurve vorgenommen wird.

Erfindungsgemäß ist die Betriebsfrequenz im Bereich von einigen 10 bis einigen 100 kHz und die Zündfrequenz im Bereich von einigen 100 kHz bis ca. 1,5 MHz gewählt. Durch die Wahl dieser relativ hohen Frequenzen ist es möglich kleine Bauelemente zu verwenden.

Eine besonders zweckmäßige Weiterbildung der Erfindung sieht vor, daß zur Vermeidung von Hochfrequenzeinstreuungen in das Gleichspannungsversorgungsnetz, insbesondere das Bordnetz eines Kraftfahrzeuges, ein Querkondensator und ggf. eine Längsinduktivität vorgesehen ist. Des weiteren ist es von besonderem Vorteil, einen Verpolschutz vorzusehen, wobei der Verpolschutz vorzugsweise einen Transistor mit niedriger Sättigungsspannung enthält.

In vorteilhafter Ausgestaltung ist bei der erfindungsgemäßen Schaltungsanordnung zur Verminderung der dynamischen Schaltverluste und zur Erhöhung der möglichen Betriebsfrequenz vorgesehen, als gesteuerte Schalttransistoren in der Brückenschaltung MOSFET-Transistoren verwendet werden.

Zeichnung

Die Erfindung ist anhand eines in der Zeichnung dargestellten Ausführungsbeispiels in der nachfolgenden Beschreibung näher erläutert. Es zeigt:

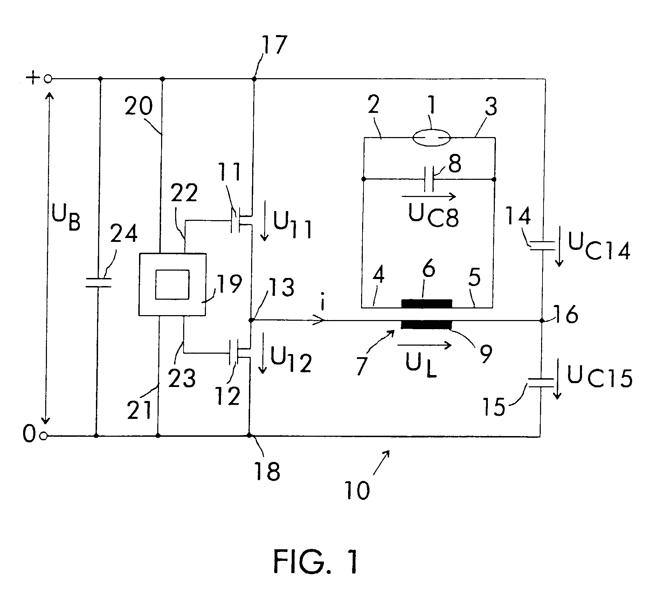

Fig. 1 schematisch ein Blockschaltbild der erfindungsgemäß gestalteten Schaltungsanordnung zum Betrieb und zum Starten einer Hochdruckgasentladungslampe.

Beschreibung des Ausführungsbeispiels

In der Fig. 1 ist anhand eines schematischen Blockschaltbildes die erfindungsgemäß gestaltete Schaltungsanordnung zum Betrieb und zum Starten einer Hochdruckgasentladungslampe dargestellt. Eine Hochdruckgasentladungslampe 1 ist mit ihren Elektroden 2 und 3 an die beiden Enden 4 und 5 der Sekundärwicklung 6 eines Transformators 7 angeschlossen. Zwischen den Elektroden 2 und 3 ist parallel zur Hochdruckgasentladungslampe 1 ein Kondensator 8 geschaltet. Aus der Kapazität $C_L$ des Kondensators 8 und der Induktivität $L_2$ der Sekundärwicklung 6 des Transformators 7 ist auf dessen Sekundärseite eine Schwingkreis gebildet, durch den die Hochdruckgasentladungslampe 1 mit Brenn- und Zündenergie versorgt wird.

Die Primärwicklung 9 des Transformators 7 liegt im Brückenzweig einer Brückenschaltung 10. Die dargestellte Brückenschaltung 10 ist eine sogenannte kapazitive Halbbrücke, bei der in einem Zweig, hier in dem linken, zwei gesteuerte Schalttransistoren 11 und 12 angeordnet sind. Der Verbindungspunkt 13 der beiden Transistoren 11 und 12 bildet den einen Anschluß des Brückenzweiges. Im anderen Zweig, hier im rechten, sind zwei Kondensatoren 14 und 15 angeordnet. Der Verbindungspunkt 16 der beiden Kondensatoren 14 und 15 bildet den zweiten Anschluß des Brückenzweiges. In diesem Brückenzweig liegt zwischen den Anschlüssen 13 und 16 die bereits erwähnte Primärwicklung 9 des Transformators 7 mit ihrer Induktivität $L_1$. Schalttransistor 11 und Kondensator 14 sind am Anschluß 17 miteinander verbunden und an den Pluspol + einer Versorgungsspannungsquelle, beispielsweise der Batterie eines Kraftfahrzeuges angeschlossen. Schalttransistor 12 und Kondensator 15 sind am Anschluß 18 miteinander verbunden und an das Erdpotential 0 der Versorgungsspannungsquelle angeschlossen.

Zwischen Pluspol + und Erdpotential 0 liegt die Batteriespannung $U_B$ an. Ein Mikrokontroller 19 ist mit seinen Anschlüssen 20 und 21 an den Pluspol + bzw. das Erdpotential 0 der Versorgungsspannung $U_B$ angeschlossen. Steuerausgänge 22 und 23 des Mikrokontrollers 19 sind auf die Steuereingänge der zugehörigen gesteuerten Schalttransistoren 11 bzw. 12 geführt. Zur Vermeidung von Hochfrequenzeinstreuung in das Bordnetz über die Anschlüsse + und 0 ist ein Querkondensator 24 vorgesehen. Weiterhin kann ggf. zu diesem Zweck auch noch eine Längsinduktivität vorgesehen sein, die jedoch in der Figur nicht dargestellt ist. Weiterhin nicht dargestellt, jedoch als zweckmäßig vorgesehen, ist ein Verpolschutz, der vorzugsweise nicht nur eine Verpolschutzdiode, sondern einen Transistor mit niedriger Sättigungsspannung, insbesondere einen MOSFET-Transistor, enthält.

Die Arbeitsweise und weitere Details der erfindungsgemäßen Schaltungsanordnung sowie vorteilhafte und zweckmäßige Ausgestaltungen und Weiterbildungen werden im Folgenden beschrieben.

Die Hochdruckgasentladungslampe 1 wird über den Schwingkreis auf der Sekundärseite des Transformators 7 betrieben. Dieser Schwingkreis wird aus der Induktivität $L_2$ der Sekundärwicklung 6 und der Kapazität $C_L$ des Kondensators 8 gebildet. Die Primärwicklung 9 des Transformators 7 wird entweder über den gesteuerten Schalttransistor 11 mit der positiven Spannung + $U_B$ verbunden oder über den gesteuerten Schalttransistor 12 mit dem Erdpotential 0.

Nach dem Einschalten des Schalttransistors 11 ist die linke Seite der Primärwicklung 9 praktisch mit + $U_B$ verbunden. An der Wicklung baut sich die Spannung $u_L = = L*di/dt$ auf.

Insgesamt gilt:

$$U_B = u_{T11} + u_L + u_{C15}.$$

Dabei ist $u_{T11}$ gleich der kleinen Sättigungsspannung des Schalttransistors 11.

Wird der Schalttransistor 11 geschlossen und der Schalttransistor 12 geöffnet, so gilt die Beziehung:

$$U_B = u_{T12} - u_L + u_{C14},$$

wobei $u_{T12}$ jetzt die kleine Sättigungsspannung des Schalttransistors 12 ist.

Durch geeignete Ansteuerung der Steuereingänge 22 und 23 der Schalttransistoren 11 und 12 seitens des Mikrokontrollers 19 wird also aus der Batteriespannung $U_B$ des Bordnetzes auf der Primärseite 9 des Transformators 7 eine Wechselspannung erzeugt. Diese wird auf die Sekundärseite 6 transformiert und regt den Schwingkreis mit der Hochdruckgasentladungslampe 1 an.

Solange die Hochdruckgasentladungslampe 1 noch nicht gezündet hat, stellt sie den Widerstand Unendlich dar. Es besteht dann ein schwingungsfähiges Gebilde aus vier Energiespeichern, nämlich Kondensator 8, Transformator 7, Kondensator 14 und Kondensator 15. Dieses Gebilde wird über die Schalttransistoren 11 und 12 mit Spannung versorgt. Wird das Gebilde über die Schalttransistoren 11 und 12 bei seiner dominanten Resonanzfrequenz angeregt, so wird bei entsprechend richtiger Dimensionierung des Übertragungsverhältnisses ü des Transformators 7 und der Güte Q des Gebildes am Kondensator 8 eine so große Spannung $u_{C8}$ erzielt, daß diese Spannung zum Zünden der Hochdruckgasentladungslampe 1 ausreicht.

Die theoretisch erzielbare Spannung $u_{C8}$ am Kondensator 8 ist wesentlich größer zu wählen als die tatsächlich notwendige Zündspannung, um alle Toleranzen in der Praxis abdecken zu können.

Die hier dargestellte erfindungsgemäße Schaltung beinhaltet im Hinblick auf die bekannten Xenonlampe mit einer Zündspannung von etwa 24 kV bei Impulszündung, den prinzipiellen Vorteil, daß die notwendige Zündspannung auf etwa die Hälfte reduziert ist, weil durch die hochfrequente Arbeitsweise in jeder Halbwelle Energie in die Lampe nachgeschoben wird, sobald der erste Lichtbogen gezündet ist. Somit stabilisiert sich der Lichtbogen bereits bei erheblich niedrigeren Spannungswerten.

Nach der Zündung der Hochdruckgasentladungslampe 1 hat das oben dargestellte schwingungsfähige Gebilde eine andere Struktur. Die Hochdruckgasentladungslampe 1 stellt nunmehr einen niederohmigen Widerstand in der Größenordnung von etwa 200 Ohm dar. Damit wird die Funktion des Kondensators 8 wegen dessen Hochohmigkeit bei normaler Dimensionierung bedeutungslos, d.h. die Schaltung hat einen Energiespeicher weniger. Daher weist sie im Brennbetrieb eine andere Resonanzfrequenz auf. Die Hochdruckgasentladungslampe 1 verhält sich wie ein ohm'scher Widerstand und stellt eine große Dämpfung dar. Somit sind Strom und Spannung an der Hochdruckgasentladungslampe 1 in Phase. Vor erfolgter Zündung fließt ein reiner Blindstrom durch den Kondensator 8, der gegenüber der Spannung an ihm um 90° phasenverschoben ist.

Die beiden Kondensatoren 14 und 15 sind Bauelemente, welche die Spannung an den beiden Schalttransistoren 11 und 12 auf maximal $U_B$ + einer Diodenspannung begrenzen. Diese Kondensatoren übernehmen die Spannung ($U_B + u_L$), die wegen $u_L$ sehr groß, d.h. einige 100 Volt, sein kann. Auf diese Weise ist es möglich, für die Schalttransistoren 11 und 12 preiswerte Niederspannungstypen zu verwenden, die einen kleinen Durchflußwiderstand $R_{DSon}$ aufweisen. Damit ist auch die statische Verlustleistung in vorteilhafter Weise reduziert. Die dynamische Verlustleistung in den gesteuerten Schalttransistoren 11 und 12 ist proportional zur Schaltfrequenz, wodurch sich gegebenenfalls eine Begrenzung der höchstzulässigen Betriebsfrequenz ergibt. Um hier den Gegebenheiten bestens Rechnung zu tragen, werden als Schalttransistoren vorzugsweise MOSFET-Transistoren verwendet.

Anstelle der beiden Kondensatoren 14 und 15 können auch gesteuerte Schalttransistoren verwendet werden, um eine sogenannte Vollbrückenschaltung zu bilden. Diese mögliche Ausführungsform, die offensichtlich zwei zusätzliche Transistoren mit der zugehörigen und angepaßten Steuerung erfordert, ist aufwendiger und hier nicht dargestellt. Je nach Anwendungszweck kann sie jedoch ggf. von Vorteil sein.

Die Leistung der Hochdruckgasentladungslampe 1 kann in vorteilhafter Weise durch Frequenzänderung erfolgen. Dabei bewegt sich die Änderung entlang der Flanke der Resonanzkurve. Dies wird durch geeignetes Timing, d.h. zeitlich richtiges Ein- und Ausschalten der gesteuerten Schalttransistoren 11 und 12 sichergestellt. Die Steuer- und Regelimpulse für die Schalttransistoren 11 und 12 werden dabei in zweckmäßiger Weise so auf deren Steuereingänge 22 und 23 gegeben, daß kein Querstrom durch die beiden Schalttransistoren 11 und 12 fließt. Für die genaue Abgabe und Festlegung der Steuerimpulse ist gemäß der Erfindung vorteilhafterweise der Mikrokontroller 19 vorgesehen.

In ihm können alle notwendigen Impulsfolgen abgelegt sein und alle weiteren notwendigen Einflußparameter berücksichtigt werden. Durch passende Programmierung kann über Software das System an die jeweilige Anwendung angepaßt werden. Zur Vermeidung einer stabilisierten Versorgungsspannung für den Mikrocontroller wird ein solcher eingesetzt, der einen ausreichend großen Betriebsspannungsbereich aufweist.

Die Anpassung des Mikrokontrollers 19 an die notwendigerweise hochfrequenten Impulsfolgen, die der HF-Betrieb erfordert, erfolgt über eine kunden- bzw. anwendunsspezifische Integration der Peripherie auf dem Mikrokontroller oder einen ASIC neben dem Mikrokontroller. Hierzu kann in sinnvoller Weise ein Oszillator mit veränderlicher Verstärkung, ein sogenannter VCO, vorgesehen sein, der die Grundtaktfrequenz nur für diese spezielle Anwendung heraufsetzt. Zur Vermeidung von Verlustleistung wird sie nur für diesen Peripherieteil verwendet.

Die erfindungsgemäß gestaltete Schaltungsanordnung zum Betrieb einer Hochdruckgasentladungslampe erfordert vorteilhafterweise wenig Bauelemente, von denen darüber hinaus insbesondere die nur nötige Niederspannungsfestigkeit der Transistoren von besonderem Vorteil ist. Die angewandte Hochfrequenz für die Betriebsfrequenz wird aus einer niedrigen Gleichspannung gewonnen und liegt zwischen einigen 100 kHz und ca. 1,5 MHz. Dadurch können sowohl in sich kleinere, als auch vielfach kostengünstigere Bauelemente Verwendung finden. Der nötige Raumbedarf sowie der Kostenaufwand wird somit gesenkt. Dies alles führt zu einem erhöhten Qualitätsniveau und damit auch zu einer erhöhten Zuverlässigkeit bei langer Lebensdauer und günstigen Kosten.

## Patentansprüche

**1.** Schaltungsanordnung zum Betrieb einer Hochdruckgasentladungslampe (1) enthaltend eine Brückenschaltung (10), bei der in zumindest einem Zweig zwei gesteuerte Schalttransistoren (11, 12) angeordnet sind, und bei der die Hochdruckgasentladungslampe (1) über den Brückenzweig der Brückenschaltung (10) mit Zünd- und Brennenergie versorgt wird, im Brückenzweig (13-16) der Brückenschaltung (10) die Primärwicklung (9) eines Transformators (7) angeordnet ist, auf der Sekundärseite (6) des Transformators (7) ein Schwingkreis (6, 8) angeordnet ist, die Hochdruckgasentladungslampe (1) von dem sekundärseitigen Schwingkreis (6, 8) mit Brenn- und Zündenergie versorgt wird, und sowohl der Brennbetrieb als auch der Zündvorgang mit Hochfrequenz betrieben wird, wobei die Frequenz der Zündung höher als die Frequenz beim Brennbetrieb ist, dadurch gekennzeichnet, daß der Schwingkreis (6, 8) auf der Sekundärseite des Transformators (7) lediglich aus der Induktivität der Sekundärwicklung (6) des Transformators (7) und der Kapazität eines Kondensators (8) gebildet ist, parallel zum Kondensator (8) die Hochdruckgasentladungslampe (1) mit ihren Elektroden (2, 3) direkt anzuschließen ist, zur Steuerung der Schalttransistoren (11, 12) ein Mikrokontroller (19) vorgesehen ist, der die notwendigen Steuerimpulsfolgen generiert und daß die Betriebsfrequenz im Bereich von einigen 10 bis einigen 100 kHz und die Zündfrequenz im Bereich von einigen 100 kHz bis ca. 1,5 MHz gewählt ist.

2. Schaltungsanordnung nach Anspruch 1, dadurch gekennzeichnet, daß die Steuerung so erfolgt, daß ein Querstrom in den gesteuerten Schalttransistoren (11, 12) vermieden ist.

3. Schaltungsanordnung nach Anspruch 1 oder 2, dadurch gekennzeichnet, daß ein ASIC mit dem Mikrokontroller (19) verbunden ist, um die anwendungsspezifische Anspassung an das jeweilige Steuerungsprofil zur Verfügung zu stellen.

4. Schaltungsanordnung nach einem der vorigen Ansprüche, dadurch gekennzeichnet, daß die Regelung der Leistung der Hochdruckgasentladungslampe (1) über eine Änderung der Frequenz erfolgt, wobei die Änderung entlang der Flanke der Resonanzkurve vorgenommen wird.

5. Schaltungsanordnung nach einem der vorigen Ansprüche, dadurch gekennzeichnet, daß zur Vermeidung von Hochfrequenzeinstreuungen in das Gleichspannungsversorgungsnetz (+, 0), insbesondere das Bordnetz eines Kraftfahrzeuges, ein Querkondensator (24) und ggf. eine Längsinduktivität vorgesehen ist.

6. Schaltungssanordnung nach einem der vorigen Ansprüche, dadurch gekennzeichnet, daß ein Verpolschutz vorgesehen ist, wobei der Verpolschutz vorzugsweise einen Transistor mit niedriger Sättigungsspannung, insbesondere einen MOSFET-Transistor, enthält.

7. Schaltungsanordnung nach einem der vorigen Ansprüche, dadurch gekennzeichnet, daß als gesteuerte Schalttransistoren (11, 12) in der Brückenschaltung (10) MOSFET-Transistoren vorgesehen sind.

**Claims**

1. Circuit arrangement for operating a high-pressure gas discharge lamp (1), including a bridge circuit (10) in the case of which two controlled switching transistors (11, 12) are arranged in at least one arm, and in the case of which the high-pressure gas discharge lamp (1) is supplied with starting and burning power via the bridge arm of the bridge circuit (10), the primary winding (9) of a transformer (7) is arranged in the bridge arm (13, 16) of the bridge circuit (10), a resonance circuit (6, 8) is arranged on the secondary side (6) of the transformer (7), the high-pressure gas discharge lamp (1) is supplied with burning and starting power by the secondary-side resonance circuit (6, 8), and both the burning operation and the starting operation are operated at high frequency, the starting frequency being higher than the frequency during burning operation, characterized in that the resonance circuit (6, 8) on the secondary side of the transformer (7) is formed only from the inductance of the secondary winding (6) of the transformer (7) and the capacitance of a capacitor (8), the high-pressure gas discharge lamp (1) is to be connected directly with its electrodes (2, 3) in parallel with the capacitor (8), and a microcontroller (19) which generates the required control pulses is provided for the purpose of controlling the switching transistors (11, 12), and in that the operating frequency is selected in the range from a few 10 to a few 100 kHz, and the starting frequency is connected in the range from a few 100 kHz to approximately 1.5 MHz.

2. Circuit arrangement according to Claim 1, characterized in that the control is performed so as to avoid a cross current in the controlled switching transistors (11, 12).

3. Circuit arrangement according to Claim 1 or 2, characterized in that an ASIC is connected to the microcontroller (19) in order to make the application-specific adaptation available to the respective control profile.

4. Circuit arrangement according to one of the preceding claims, characterized in that the power of the high-pressure gas discharge lamp (1) is controlled by varying the frequency, the variation being undertaken along the flank of the resonance curve.

5. Circuit arrangement according to one of the preceding claims, characterized in that a parallel capacitor (24) and, if appropriate, a series inductor is/are provided in order to avoid high-frequency interference in the DC supply system (+, 0), particularly in the electrical system of a motor vehicle.

6. Circuit arrangement according to one of the preceding claims, characterized in that reverse voltage protection is provided, the reverse voltage protection preferably including a transistor with low saturation voltage, in particular a MOSFET transistor.

7. Circuit arrangement according to one of the preceding claims, characterized in that MOSFET transistors are provided in the bridge circuit (10) as controlled switching transistors (11, 12).

## Revendications

1. Circuit de commande d'une lampe à décharge de gaz à haute pression (1) comprenant un montage en pont (10) dont au moins une branche comporte deux transistors de commutation (11, 12), commandés, et la lampe à décharge à haute pression (1) est alimentée en énergie de démarrage et de fonctionnement par la branche du montage en pont (10), cette branche (13-16) du montage en pont (10) comportant le primaire (9) d'un transformateur (7) dont le secondaire (6) est relié à un circuit oscillant (6, 8) qui alimente en énergie de démarrage et de fonctionnement la lampe à décharge à haute pression (1), et à la fois le démarrage et le fonctionnement permanent se font à haute fréquence, la fréquence du démarrage (allumage) étant supérieure à la fréquence du fonctionnement permanent, caractérisé en ce que

   • le circuit oscillant (6, 8) relié au secondaire du transformateur (7) est formé uniquement par l'inductance du secondaire (6) du transformateur (7) et de la capacité d'un condensateur (8), la lampe à décharge haute pression (1) ayant ses électrodes (2, 3), directement reliées en parallèle au condensateur (8).
   • un microcontrôleur (19) commande les transistors de commutation (11, 12), en générant les suites d'impulsions de commande nécessaires, et
   • la fréquence de fonctionnement se situe dans une plage de quelques 10 à quelques 100 kHz et la fréquence de démarrage est située dans une plage de quelques 100 kHz jusqu'à environ 1,5 MHz.

2. Circuit selon la revendication 1, caractérisé en ce que la commande évite un courant transversal dans les transistors de commutation commandés (11, 12).

3. Circuit selon l'une quelconque des revendications 1 ou 2, caractérisé en ce qu' une carte ASIC est reliée au microcontrôleur (19) pour avoir un profil de commande adapté à l'application spécifique.

4. Circuit selon l'une quelconque des revendications précédentes, caractérisé en ce que la régulation de la puissance de la lampe à décharge de gaz haute pression (1) se fait par variation de la fréquence, cette variation étant faite le long du flanc de la courbe de résonance.

5. Circuit selon l'une quelconque des revendications précédentes, caractérisé par un condensateur transversal (24) et le cas échéant une inductance longitudinale pour éviter d'injecter de la haute fréquence dans le réseau d'alimentation en tension continue (+, 0), notamment le réseau embarqué d'un véhicule automobile.

6. Circuit selon l'une quelconque des revendications précédentes, caractérisé par une protection anti-inversion de polarité, comportant de préférence un transistor à faible tension de saturation notamment un transistor MOSFET.

7. Circuit selon l'une quelconque des revendications précédentes, caractérisé en ce que les transistors de commutation, commandés (11, 12) du montage en pont (10) sont des transistors MOSFET.

FIG. 1